Europäisches Patentamt

(19) European Patent Office

Office européen des brevets

(11) Numéro de publication : **0 291 388 B1**

# (12) FASCICULE DE BREVET EUROPEEN

(45) Date de publication du fascicule du brevet :
27.02.91 Bulletin 91/09

(51) Int. Cl.⁵ : **G01V 1/13, G01V 1/40**

(21) Numéro de dépôt : 88401076.0

(22) Date de dépôt : 04.05.88

(54) **Méthode de prospection sismique permettant une connaissance améliorée des discontinuités géologiques du sous-sol.**

(30) Priorité : 07.05.87 FR 8706544

(43) Date de publication de la demande :
17.11.88 Bulletin 88/46

(45) Mention de la délivrance du brevet :
27.02.91 Bulletin 91/09

(84) Etats contractants désignés :
DE GB IT NL

(56) Documents cités :
FR-A- 1 559 153
FR-A- 1 602 303
US-A- 2 089 983
US-A- 4 300 220

(73) Titulaire : INSTITUT FRANCAIS DU PETROLE
4, Avenue de Bois-Préau
F-92502 Rueil-Malmaison (FR)

(72) Inventeur : Dubesset, Michel
4, Chemin Vert Bazemont
F-78580 Maule (FR)
Inventeur : Cliet, Christian
15 ter, rue Bon Marché
F-92500 Reuil-Malmaison (FR)

## Description

L'invention a pour objet une méthode de prospection sismique permettant une connaissance améliorée de l'emplacement et de la nature des discontinuités géologiques du sous-sol.

Les méthodes de prospection sismique comportent généralement une étape d'émission d'ondes sismiques, une étape de réception en un ou plusieurs emplacements des ondes qui se sont propagées dans le terrain à étudier, une étape d'enregistrement des signaux reçus et une étape d'application aux signaux enregistrés, de traitements de natures très diverses avant de dresser des coupes sismiques où les discontinuités du sous-sol sont restituées à leur vraie place.

Une méthode connue de prospection sismique comporte l'émission d'ondes sismiques par une source disposée soit à la surface du sol soit dans un autre puits et la réception des ondes après propagation en un ou plusieurs emplacements en surface ou le long d'un puits foré dans le sol.

Dans les puits la réception des ondes est effectuée au moyen d'un dispositif de réception comportant au moins une sonde de faible section, suspendue par un câble électro-porteur à un ensemble de support disposé en surface, et munie de bras d'ancrage escamotables pour plaquer le corps de la sonde contre la paroi du puits. Dans un compartiment du corps de sonde sont disposés un ou plusieurs capteurs sismiques directionnels.

Ces capteurs sont généralement associés par trois et leurs axes disposés suivant trois axes orthogonaux.

Le dispositif de réception peut comporter aussi plusieurs sondes de puits suspendues les unes au-dessous des autres et contenant chacune au moins un capteur triaxial, de manière à multiplier les emplacements de réception des ondes sismiques. La sonde ou l'ensemble de sondes est descendu(e) dans le puits et remonté(e) par paliers successifs. A chaque pause, on effectue un cycle d'émission d'ondes sismiques.

Les ondes qui se sont propagées jusqu'à la sonde ou l'ensemble des sondes, sont reçues par les capteurs triaxiaux et les signaux sismiques sont collectés par un ensemble d'acquisition qui les transmet à un laboratoire de surface.

De telles sondes de puits sont décrites par exemple dans les brevets français 2.501.380 et 2.548.727 et les demandes de brevets français EN. 87/04.365 et 87/04.677.

Les signaux reçus sont en général complexes. Les géophysiciens ont cherché à déterminer la courbe décrite par les particules des terrains traversés par les ondes sismiques désignées ci-après par trajectoire, et ont trouvé que la surface qui pouvait le mieux la représenter, au moins pendant un certain temps à partir du début de la réception, était un ellipsoïde généralement très aplati.

On a jusqu'ici considéré que cet ellipsoïde aplati modélisant la trajectoire réelle, était contenu dans un plan sensiblement vertical, les écarts pouvant être négligés, et que ce plan vertical était celui qui passait par la source sismique et l'emplacement de chaque récepteur.

Le principe de la mesure des trajectoires elliptiques des particules d'un terrain soumises à des vibrations sismiques, dans le but de définir leur orientation dans l'espace, est connu par exemple par le brevet US-A-2 089 943.

La méthode décrite dans ce brevet antérieur comporte l'utilisation d'un instrument pour mesurer en surface le mouvement du sol. Les oscillations sont transmises par l'intermédiaire d'une structure de support reposant sur le sol, à une lame flexible et un système d'orientation de la lame dans l'espace permet de déterminer l'orientation particulière qu'il faut lui donner pour annuler les vibrations. On mesure alors deux angles caractéristiques de l'orientation du plan vertical contenant l'ellipse.

Dans le cas où la réception est effectuée dans un puits, l'orientation de cet ellipsoïde dans son plan vertical, est déterminée à partir des signaux reçus par les trois capteurs élémentaires de chaque récepteur triaxial mis au contact des parois du puits. La sonde ou chacune d'elles étant susceptible de tourner plus ou moins sur son axe pendant les manoeuvres de descente ou de remontée, le trièdre constitué des axes respectifs des trois capteurs élémentaires de chaque récepteur, peut avoir une orientation quelconque par rapport au plan vertical passant par la source et l'emplacement de réception. Dans l'hypothèse admise, on avait à comparer et à combiner les signaux délivrés par les capteurs d'un même récepteur, de manière à déterminer l'angle dièdre du plan vertical de la trajectoire avec un plan vertical de référence formé par deux axes du trièdre et l'angle entre les axes de symétrie de la trajectoire et le plan horizontal. Ces deux angles que, par analogie on peut désigner par longitude et latitude, suffisaient pour caractériser la position de la trajectoire. La connaissance de ces deux angles et d'autres paramètres tels que l'ellipticité de la trajectoire permettait dans l'hypothèse retenue, de déterminer certaines caractéristiques géophysiques et géologiques des terrains traversés par les ondes.

La méthode de prospection sismique selon l'invention permet d'améliorer de façon très sensible la connaissance des caractéristiques géologiques des terrains traversés.

Elle comporte l'émission d'ondes acoustiques dans le sol, la réception des ondes acoustiques qui se sont propagées dans le sol au moins un récepteur sismique triaxial et l'enregistrement des ondes reçues. Elle est caractérisée en ce qu'elle comporte la détermination à partir des différents signaux délivrés par chaque récepteur, de paramètres définissant la position réelle dans l'espace et la forme de la trajectoire suivie par le centre de gravité de chaque récepteur, en réponse aux ondes reçues, la détermination en fonction de la distance entre chaque récepteur et le lieu d'émission, des variations de chacun desdits paramètres et la localisation des discontinuités géologiques aux profondeurs où l'on a mesuré des variations significatives desdits paramètres.

La trajectoire étant modélisée par son "ellipsoïde équivalent" on combine par exemple les ondes reçues par les trois capteurs de chaque récepteur, pour déterminer sa position dans l'espace et des paramètres indicatifs de sa forme, et on établit les courbes représentatives des variations des différents paramètres en fonction de la distance entre chaque récepteur et le lieu d'émission des ondes sismiques.

Chaque récepteur est par exemple appliqué contre la paroi d'un forage et le lieu d'émission est situé à la surface du sol. Dans ce cas, sa distance au lieu d'émission est sensiblement sa profondeur, et c'est en fonction de celle-ci que lesdits paramètres sont représentés.

D'autres caractéristiques et avantages de la méthode apparaîtront à la lecture de la description d'un mode de réalisation donné à titre d'exemple non limitatif, en se référant aux dessins annexés où :

    – la figure 1 montre un ensemble de réception comportant plusieurs sondes, descendu dans un forage ;

    – la figure 2 montre les projections sur trois plans orthogonaux, d'une trajectoire ayant une polarisation privilégiée dans un plan vertical, pendant un intervalle de temps limité.

    – la figure 3 montre des projections sur trois plans orthogonaux d'une trajectoire relevée pendant un intervalle de temps limité,

    – la figure 4 montre une représentation de la trajectoire du centre de gravité des trois capteurs d'un même récepteur triaxial sous l'action des ondes sismiques captées, polarisée dans un plan vertical, où $\varphi$ représente la latitude et $\lambda$, la longitude.

    – la figure 5 représente également des projections sur trois plans orthogonaux d'une trajectoire relevée pendant un intervalle de temps limité, et illustre le cas général où le plan de polarisation de la trajectoire est orienté dans l'espace de manière quelconque ; et

    – la figure 6 montre une trajectoire quelconque dans l'espace et ses paramètres représentatifs.

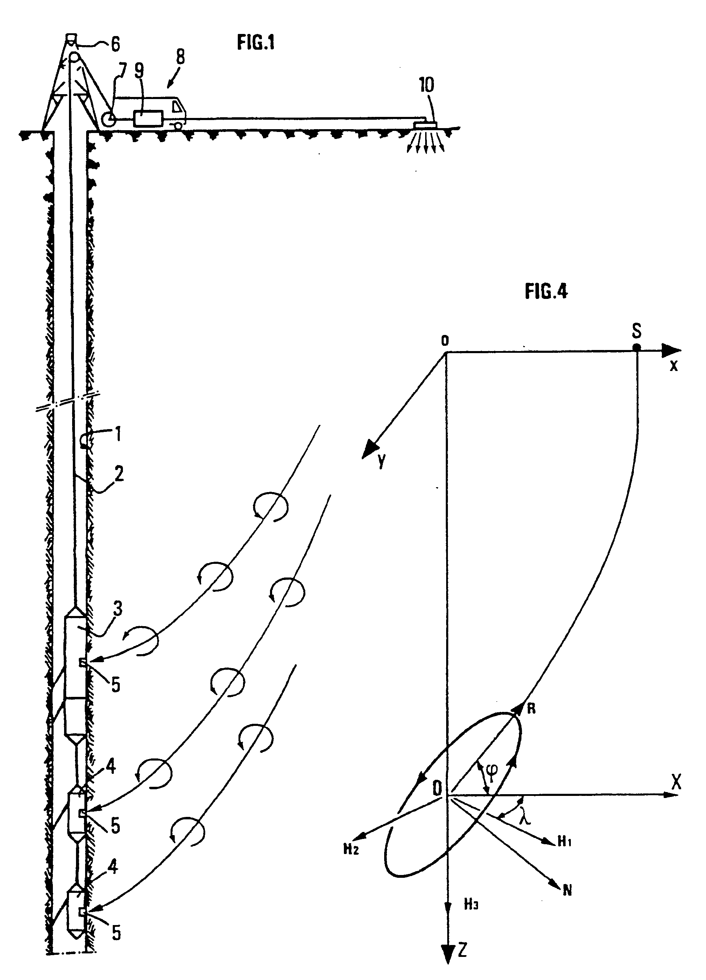

Des opérations de prospection sismique du sous-sol peuvent être réalisées en descendant dans un forage 1 (fig. 1) à l'extrémité d'un câble électro-porteur multi-fonctions 2, un dispositif de réception comportant une sonde unique 3 sous laquelle éventuellement sont suspendues des sondes satellites 4.

Dans chacune des sondes, est disposé au moins un récepteur sismique 5 comportant au moins un capteur directif. On utilise généralement des récepteurs triaxiaux comportant trois capteurs directifs dont les axes sont dirigés suivant trois directions orthogonales les unes par rapport aux autres et forment un trièdre trirectangle. Les sondes sont munies de bras d'ancrage et peuvent être immobilisées dans le forage à toute profondeur où des relevés sismiques doivent être effectués. Le câble électro-porteur 2 relie la sonde 3 ou l'ensemble de sondes (3, 4) à un ensemble de surface comportant une structure de support 6 et un treuil 7 disposé sur un véhicule 8. Les signaux captés par chaque récepteur sont transmis par des conducteurs électriques du câble, à un système central de commande et d'enregistrement 9 disposé sur le véhicule. La connexion est directe si le nombre de récepteurs est faible. Elle est assurée dans un autre cas par l'intermédiaire d'un appareil d'acquisition de données disposé dans une des sondes et adapté à collecter, numériser et coder les signaux sismiques à transmettre. De tels ensembles de réception pour forage sont décrits dans les demandes de brevets ou brevet français précités.

La sonde ou l'ensemble de sondes étant plaqué contre la paroi du forage à une profondeur choisie, on actionne une source sismique 10 disposée au contact du sol et on procède à l'enregistrement des ondes qui se sont propagées jusqu'aux différents récepteurs.

Le déplacement des particules de terrain dans la paroi du forage contre laquelle sont appliqués les récepteurs sismiques, est en général fort complexe.

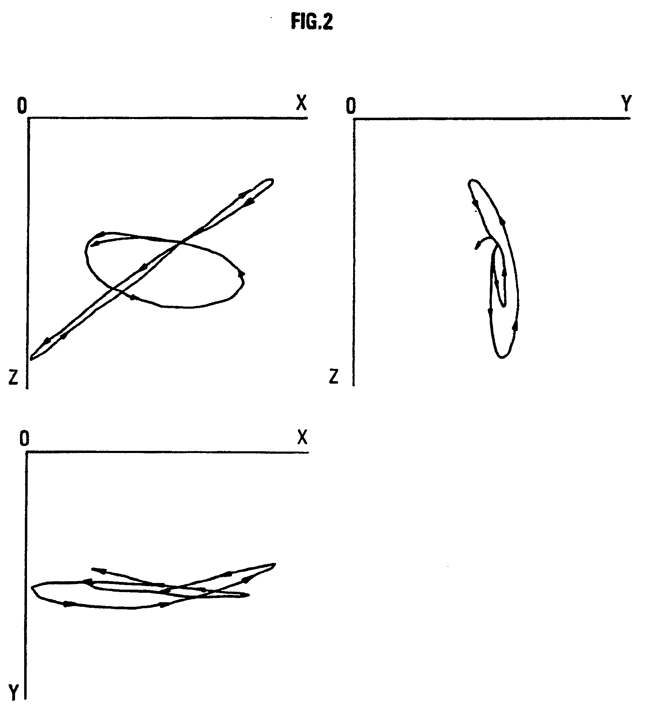

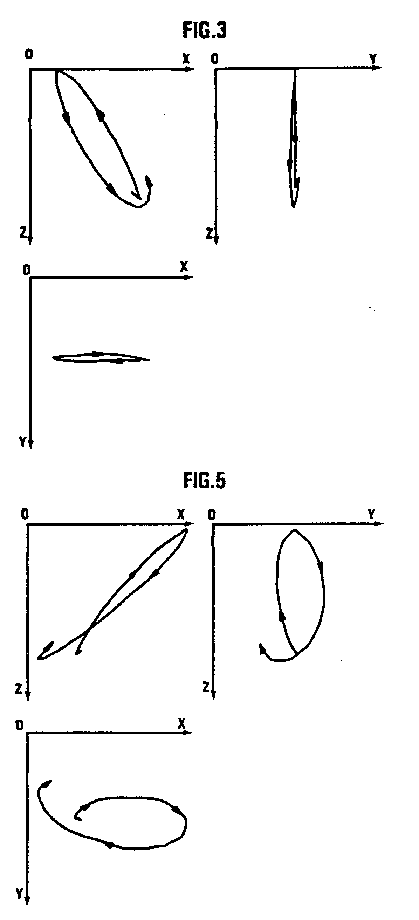

Le mouvement du centre de gravité de chaque récepteur sismique triaxial peut être représenté comme le montre la figure 2, par sa projection sur trois plans orthogonaux, le plan vertical XOZ contenant l'emplacement d'un récepteur sismique et celui de la source sismique 10, le plan vertical YOZ perpendiculaire au précédent et le plan horizontal XOY. On désignera ci-après par trajectoire ce mouvement du centre de gravité. Si on limite la durée d'enregistrement des signaux, la trajectoire décrite peut être représentée de manière plus simple par une courbe dans l'espace qui peut, avec une bonne approximation, être considérée comme un ellipsoïde très aplati. On voit sur la figure 3 que la projection de la trajectoire sur le plan XOZ est quasiment une ellipse alors que les projections sur les deux plans orthogonaux au premier (YOZ et XOY) sont presque réduites à des segments de droite.

L'exploitation des enregistrements obtenus a été faite jusqu'ici en partant de l'hypothèse que l'ellipsoïde quasi-plan parcouru par la trajectoire, était contenu dans un plan vertical et que ce plan passait par l'emplacement de réception et celui de la source sismique S (10). Du fait de la torsion du câble électro-porteur durant les manoeuvres de montée, la position du trièdre ($H_1$, $H_2$, $H_3$) formé par les axes des capteurs d'un récepteur triaxial (fig. 4) peut être quel-

conque. L'axe $H_3$ pouvant être considéré comme toujours vertical, l'indétermination porte en fait sur la position du repère ($H_1$, $H_2$). Dans l'hypothèse en vigueur où la trajectoire était considérée comme quasiment contenue dans le plan vertical XOZ passant par le point d'émission S (fig. 4), un seul angle $\lambda$ qui correspond par analogie à une longitude, suffisait à caractériser le plan de polarisation de la trajectoire.

Le traitement des données sismiques lues sur les enregistrements, consistait dans ce cas à combiner les trois signaux de chaque récepteur de manière à calculer l'angle $\lambda$ et aussi l'angle $\varphi$, analogue à une latitude, représentant l'inclinaison du grand axe de l'ellipse par rapport à l'horizontale.

La méthode selon l'invention permet, par une prise en compte plus réaliste de la complexité des trajectoires détectées, de mesurer tout au long du forage un nombre plus important de paramètres traduisant généralement des variations lithologiques et géologiques des différentes couches traversées et donc d'obtenir une représentation plus détaillée du sous-sol.

La figure 5 montre en effet que la trajectoire ne se projette pas de façon privilégiée dans le plan XOZ comme dans le cas représenté à la figure 3 mais dans les deux plans complémentaires YOZ et XOY et que c'est la projection dans le plan XOY qui est ici réduite presque à un segment. On le vérifie aisément par la constitution et l'examen d'un couple stéréoscopique de la trajectoire qui montre que le plan moyen n'est plus vertical. Ceci s'explique par le fait que dans la plupart des cas, le plan de polarisation privilégié de la trajectoire n'est pas situé dans le plan vertical passant par chaque récepteur et l'emplacement d'émission 10 mais qu'il présente une certaine obliquité par rapport à la verticale.

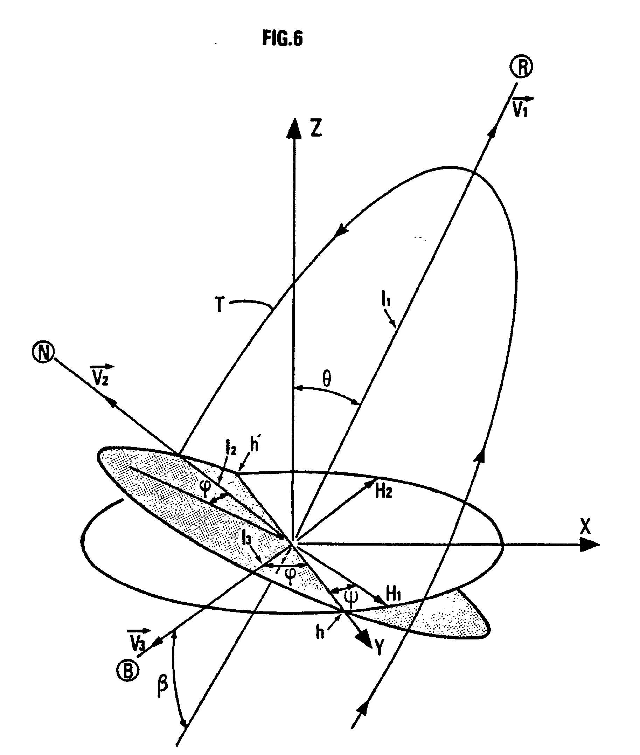

L'ellipsoïde T représentant le mieux la trajectoire observée doit donc être défini par un plus grand nombre de paramètres, comme le montre la figure 6. $\vec{V_1}$ désigne l'axe principal de polarisation de l'ellipsoïde; $\vec{V_2}$, son second axe orthogonal au premier et $\vec{V_3}$, son troisième axe perpendiculaire au plan formé par les deux précédents. Pour définir la position de ces trois axes, on peut utiliser par exemple les angles d'Euler. L'angle $\theta$ dit de nutation est celui que fait l'axe principal $\vec{V_1}$ avec la vertical OZ. Le plan normal à l'axe principal $\vec{V_1}$ coupe le plan horizontal suivant une ligne hh' qui fait un angle $\psi$ dit angle de précession, avec l'axe $H_1$ d'un des deux capteurs horizontaux de chaque récepteur sismique triaxial. Cette même ligne hh' fait avec le troisième axe $\vec{V_3}$ un angle $\varphi$ dit de rotation propre. On définit aussi un quatrième angle $\beta$ dit d'inclinaison latérale. C'est l'angle qui fait le troisième vecteur $\vec{V_3}$ avec le plan horizontal.

On définit une portion de trajectoire par un certain nombre n d'échantillons de signaux à trois composantes. A partir des valeurs des signaux enregistrés par les trois capteurs d'un même récepteur triaxial et par une méthode de transformation connue en soi, on calcule la matrice de covariance des échantillons sur un intervalle de temps déterminé et l'on obtient trois valeurs propres $I_1$, $I_2$, $I_3$ et les trois vecteurs propres $\vec{V_1}$, $\vec{V_2}$, $\vec{V_3}$ définis chacun par trois cosinus-directeurs, par rapport aux trois axes $H_1$, $H_2$, Z du trièdre lié à chaque récepteur sismique. Au vecteur propre $\vec{V_i}$ (i = 1, 2 ou 3) correspondent les cosinus-directeurs $V_i^{H1}$, $V_i^{H2}$ et $V_i^z$. On peut alors calculer les racines carrées des trois valeurs propres précédemment déterminées, racines qui représentent les longueurs a, b et c des trois demi-axes de l'ellipsoïde équivalent, à un coefficient constant près.

Les valeurs des quatres angles précédemment définis, se calculent alors par les formules suivantes:

$$\theta = \cos (V_1^z)$$
$$\psi = \tan (V_1^{H1}/\text{-}V_1^{H2})$$
$$\Phi = \tan (V_3^z/V_2^z)$$
$$\beta = \sin (V_3^z)$$

On détermine aussi d'autres paramètres de polarisation tels que notamment les coefficients d'ellipticité $e_{21}$, $e_{31}$, $e_{32}$ en faisant les rapports entre les valeurs des trois demi-axes a, b, c précédemment calculés, ou bien encore un coefficient de planéité p en combinant les valeurs des trois demi-axes a, b, c.

Les valeurs des différents paramètres ayant été calculées pour chaque récepteur sismique triaxial, on peut donc déterminer leurs courbes représentatives en fonction de la profondeur de réception et en faire des enregistrements.

La lecture de ces enregistrements de paramètres facilite beaucoup l'interprétation des enregistrements sismiques dans la mesure où il existe une corrélation manifeste entre les profondeurs où se situent des zones de discontinuités géologiques et celles où l'on observe des variations importantes dans les courbes représentatives des paramètres. On peut observer en particulier :

— qu'un accroissement de l'ellipticité principale $e_{21}$ de l'ellipsoïde va de pair avec une atténuation accrue ; et

— qu'une décroissance de l'angle de nutation $\theta$ est associée à une diminution locale de la vitesse de propagation des ondes sismiques.

En tenant compte des courbes de variation des paramètres, on peut donc préciser la position des horizons sur les enregistrements sismiques.

Dans l'exemple considéré, les récepteurs triaxiaux sont disposés dans un forage. Il va de soi que la méthode selon l'invention pourrait être appliquée en disposant les récepteurs en surface.

## Revendications

1. Méthode de prospection sismique permettant de connaître avec une meilleure précision la nature des discontinuités géologiques du sous-sol, comportant l'émission d'ondes acoustiques dans le sol, la réception des ondes acoustiques qui se sont propagées dans le sol par au moins un récepteur sismique triaxial et l'enregistrement des ondes reçues, caractérisée en ce qu'elle comporte la détermination à partir des différents signaux délivrés par chaque récepteur, de paramètres définissant la position réelle dans l'espace et la forme de la trajectoire suivie par le centre de gravité de chaque récepteur, en réponse aux ondes reçues, la détermination en fonction de la distance entre chaque récepteur et le lieu d'émission, des variations de chacun desdits paramètres et la localisation des discontinuités géologiques aux profondeurs où l'on a mesuré des variations significatives desdits paramètres.

2. Méthode selon la revendication 1, caractérisée en ce que ladite trajectoire étant modélisée par un ellipsoïde, on combine les amplitudes des ondes reçues par les trois capteurs de chaque récepteur pour déterminer sa position dans l'espace et des paramètres indicatifs de sa forme, et on établit les courbes représentatives des variations des différents paramètres en fonction de la distance entre chaque récepteur et le lieu d'émission des ondes sismiques.

3. Méthode selon la revendication 1 ou 2, caractérisée en ce que chaque récepteur est appliqué contre la paroi d'un forage et le lieu d'émission est situé à la surface du sol, la distance entre chaque récepteur et le lieu d'émission étant sensiblement sa profondeur.

4. Méthode selon la revendication 1 ou 2, caractérisée en ce que les récepteurs sont disposés en surface, ladite distance étant leur déport longitudinal par rapport au lieu d'émission.

5. Méthode selon la revendication 2, caractérisée en ce que l'on définit la trajectoire par n points en prélevant n échantillons sur les signaux délivrés respectivement par les trois capteurs de chaque récepteur triaxial, on calcule la matrice de covariance de ces n échantillons à trois composantes, de manière à déterminer les valeurs propres et vecteurs propres définis par leurs cosinus-directeurs respectifs et on combine les valeurs propres et les cosinus directeurs obtenus de manière à déterminer les angles repérant la position réelle dans l'espace de l'ellipsoïde modélisant la trajectoire et des paramètres indicatifs de sa forme.

6. Méthode selon la revendication 5, caractérisée en ce que l'on détermine notamment des coefficients définissant l'ellipticité et la planéité de la trajectoire, on détermine leurs variations en fonction de la distance entre le lieu d'émission et l'emplacement de chaque récepteur et on localise des discontinuités géologiques pour des valeurs de la distance où l'on observe des variations importantes des valeurs desdits coefficients.

**Ansprüche**

1. Seismisches Prospektionsverfahren, das mit verbesserter Genauigkeit die Art der unterirdischen geologischen Diskontinuitäten zu erkennen gestattet, unter Aussendung von Schallwellen in den Erdboden, Empfang der Schallwellen, die sich im Erdboden ausgebreitet haben, vermittels wenigstens eines seismischen triaxialen Empfängers und Aufzeichnung der empfangenen Wellen, dadurch gekennzeichnet, daß es die Bestimmung von Parametern - ausgehend von den von jedem Empfänger gelieferten unterschiedlichen Signalen - welche die reelle Position im Raum und die Form der vom Schwerpunkt jedes Empfängers verfolgten Bahn oder Trajektorie, in Abhängigkeit von den empfangenen Wellen, die Bestimmung - als Funktion der Entfernung zwischen jedem Empfänger und dem Aussendeort - der Variationen jedes dieser Parameter sowie die Lokalisierung der geologischen Diskontinuitäten auf den Tiefen umfaßt, wo man signifikative Variationen dieser Parameter gemessen hat.

2. Verfahren nach Anspruch 1, dadurch gekennzeichnet, daß, nachdem diese Bahn oder diese Trajektorie durch ein Ellipsoid als Modell ausgebildet ist, man die Amplituden der empfangenen Wellen durch die drei Aufnehmer jedes Empfängers kombiniert, um seine Position im Raum sowie für seine Form indikativen Parameter zu bestimmen und daß man die für die Variationen der verschiedenen Parameter repräsentativen Kurven als Funktion der Entfernung zwischen jedem Empfänger und dem Aussendebzw. Emissionsort der seismischen Wellen erstellt.

3. Verfahren nach Anspruch 1 oder 2, dadurch gekennzeichnet, daß jeder Empfänger gegen die Wandung einer Bohrung angelegt wird und daß der Emissionsort sich auf der Erdbodenoberfläche befindet, wobei die Entfernung zwischen jedem Empfänger und dem Aussendebzw. Emissionsort im wesentlichen seine Tiefe ist.

4. Verfahren nach Anspruch 1 oder 2, dadurch gekennzeichnet, daß die Empfänger an der Oberfläche angeordnet sind, wobei diese Entfernung ihre Längsversetzung bezogen auf den Emissionsort ist.

5. Verfahren nach Anspruch 2, dadurch gekennzeichnet, daß man die Bahn oder Trajektorie durch n-Punkte definiert, indem man n-Proben an den jeweils durch die drei Aufnehmer jedes triaxialen Empfängers gelieferten Signals entnimmt, die Kovarianzmatrix dieser n-Proben mit drei Komponenten derart berechnet, daß die durch die drei jeweiligen Richtkosinus definierten Eigenwerte und Eigenvektoren bestimmt werden und daß man die erhaltenen Eigenwerte und Richtkosinus derart kombiniert, daß die Winkel bestimmt werden, welche die reelle Position des die Bahn als Modell ausbildenden Ellipsoids im Raum sowie der für seine Form indikativen Parameter bestimmt.

6. Verfahren nach Anspruch 5, dadurch gekennzeichnet, daß man insbesondere die Elliptizität und die Planität der Bahn definierende koeffizienten bestimmt, man ihre Variationen als Funktion der Entfernung zwischen dem Emissionsort und dem Ort jedes Empfängers bestimmt und man geologische Diskontinuitäten für Werte der Entfernung lokalisiert, wo man erhebliche Variationen der Werte dieser Koeffizienten beobachtet.

## Claims

1. Method of seismic survey which permits the nature of geological discontinuities in the sub stratum to be determined with improved accuracy, comprising the emission of sound waves through the sub stratum, the reception of sound waves propagated through the said sub stratum by at least one triaxial seismic receiver and recording of the waves received, characterised in that it includes the determination, using the different signals collected by each receiver, of parameters defining the actual position in space and the form of the trajectory followed by the centre of gravity of each receiver in response to the waves received, the determination in terms of the distance between each receiver and the point of emission of variations in each of the said parameters and the localisation of geological discontinuities at those depths where significant variations in the said parameters have been measured.

2. Method in accordance with claim 1, characterised in that the said trajectory may be represented, in a model, by an ellipsoid, the amplitudes of the waves received by the three sensors for each receiver being combined to determine its position in space and those parameters which are indicative of its form and to establish the curves representative of the variations in the different parameters in terms of the distance between each receiver and the point of emission of the seismic waves.

3. Method in accordance with claims 1 or 2, characterised in that each receiver is applied against the wall of the bore hole and the point of emission is situated on the ground surface, the distance between each receiver and the point of emission being basically equal to its depth.

4. Method in accordance with claims 1 or 2, characterised in that the receivers are located on the surface, the said distance being equal to their longitudinal distance apart relative to the point of emission.

5. Method in accordance with claim 2, characterised in that the trajectory is defined by n points by taking n samples of the signals collected respectively by the three sensors for each triaxial receiver, the covariance matrix for these n samples comprising three components being calculated in order to determine the proper values and the proper vectors, as defined by their respective directrix cosines, the proper values and the directrix cosines obtained being combined in order to determine the angles identifying the actual position in space of the ellipsoid forming a model of the trajectory and the parameters which are indicative of its form.

6. Method in accordance with claim 5, characterised in that, in particular, coefficients defining the ellipticity and the flatness of the trajectory are determined, together with their variations in terms of the distance between the point of emission and the location of each receiver, the geological discontinuities being localised in accordance with the values for the distance where important variations in the values of the said coefficients are observed.

**FIG.1**

**FIG.4**

**FIG.2**

## FIG.3

## FIG.5

## FIG.6